# EUROPÄISCHE PATENTANMELDUNG

(11) **EP 4 458 529 A1**
(43) Veröffentlichungstag der Anmeldung: **06.11.2024**
(21) Anmeldenummer: 23170968.4
(22) Anmeldetag: 02.05.2023
(51) Int. Cl.: B25J 15/02, B25J 15/10

(54) **GREIFZANGE, GREIFSYSTEM UND VERWENDUNG EINER GREIFZANGE**

(71) Anmelder: bodus GmbH, 5000 Aarau (CH)
(72) Erfinder: Usul, Muarem, 4665 Oftringen (CH)
(74) Vertreter: Meissner Bolte Partnerschaft mbB

(57) **Zusammenfassung**

Die Erfindung betrifft eine Greifzange (10) zum Greifen von Gegenständen, insbesondere in einem Kanalsystem, mit
- wenigstens einem Gehäuse (11) mit einer Mittelachse;
- wenigstens einem Kolben (12), der in dem Gehäuse (11) entlang der Mittelachse verschiebbar angeordnet ist; und
- mehreren Greifarmen (13), die jeweils in und/oder an dem Gehäuse (11) um eine Gelenkachse schwenkbar gelagert sind,
wobei die Greifzange wenigstens ein mit dem Kolben (12) verbundenes Hubelement (14) aufweist, das mit den Greifarmen (13) derart gekoppelt ist, dass sich bei einer von den Greifarmen (13) wegführenden Hubbewegung des Kolbens (12) die Greifarme (13) von einer Offenstellung in eine Schließstellung bewegen.

## Beschreibung

Die Erfindung betrifft eine Greifzange, ein Greifsystem und die Verwendung einer solchen Greifzange beziehungsweise eines solchen Greifsystems. Eine Greifzange nach dem Oberbegriff des Patentanspruchs 1 ist beispielsweise aus der DE 20 2010 012 511 U1 bekannt.

In Wasser, Schacht- sowie Kanalleitungen können sich oftmals Gegenstände ansammeln, welche einen Durchfluss in der Leitung einschränken oder sogar blockieren. Solche Gegenstände können beispielsweise Fremdkörper sein, die in das Leitungssystem gelangen, oder sich durch Ablagerung von Feststoffen in der Leitung bilden. Um ein Verstopfen der Leitungen zu verhindern, werden diese Gegenstände oftmals unter Verwendung einer Greifzange aus der entsprechenden Leitung entfernt.

Aus der eingangs genannten DE 20 2010 012 511 U1 ist beispielsweise eine Greifzange bekannt, die mittels Druckluft betätigbare Greifarme aufweist. Zum Schließen der Greifarme wird ein Kolben mit Druckluft beaufschlagt und in Richtung der Greifarme bewegt. Der Kolben wirkt mit Enden der Greifarme zusammen, um die Greifarme von einer Offenstellung in eine Schließstellung zu überführen. Der Kolben ist in einem Gehäuse geführt, in dem auch die Greifarme schwenkbar gelagert sind. Im unbetätigten Zustand dienen eine erste Feder zur Rückstellung des Kolbens in seine Ausgangsposition und mehrere zweite Federn zum Öffnen der Greifarme.

Die Greifzange gemäß DE 20 2010 012 511 U1 weist durch ihren Aufbau eine relativ lange Bauform auf, die eine Führung in Leitungen, besonders in Bereichen von Kurven, Krümmungen sowie Abzweigen erschwert.

Der Erfindung liegt daher die Aufgabe zu Grunde, eine Greifzange zum Greifen von Gegenständen anzugeben, die durch einen verbesserten konstruktiven Aufbau eine kompakte Bauform und eine vereinfachte Handhabung aufweist. Der Erfindung liegt ferner die Aufgabe zu Grunde, ein Greifsystem und die Verwendung einer Greifzange und eines Greifsystems anzugeben.

Erfindungsgemäß wird diese Aufgabe im Hinblick auf die Greifzange durch den Gegenstand des Anspruchs 1 gelöst. Hinsichtlich des Greifsystems wird die vorstehend genannte Aufgabe durch den Gegenstand des Anspruchs 15 gelöst und hinsichtlich der Verwendung wird die vorstehend genannte Aufgabe durch den Gegenstand des Anspruchs 16 gelöst.

Konkret wird die Aufgabe durch eine Greifzange zum Greifen von Gegenständen, insbesondere in einem Kanalsystem, mit wenigstens einem Gehäuse mit einer Mittelachse, wenigstens einem Kolben, der in dem Gehäuse entlang der Mittelachse verschiebbar angeordnet ist, und mehreren Greifarmen, die jeweils in und/oder an dem Gehäuse um eine Gelenkachse schwenkbar gelagert sind, gelöst.

Erfindungsgemäß weist die Greifzange wenigstens ein mit dem Kolben verbundenes Hubelement auf, das mit den Greifarmen derart gekoppelt ist, dass sich bei einer von den Greifarmen wegführenden Hubbewegung des Kolbens die Greifarme von einer Offenstellung in eine Schließstellung bewegen.

Mit anderen Worten werden die Greifarme durch den Kolben von der Offenstellung in die Schließstellung gezogen, wobei das Hubelement einerseits mit dem Kolben verbunden und andererseits mit den Greifarmen gekoppelt ist. Das Hubelement dient also als Verbindungsteil zwischen dem Kolben und den Greifarmen, um die Hubbewegung des Kolbens in eine Drehbewegung um die Gelenkachsen der Greifarme zu übertragen. Das Hubelement ist somit derart angepasst, dass sich bei einer von den Greifarmen wegführenden Hubbewegung des Kolbens die Greifarme schließen. Dies entspricht einer Greifsituation, in der die Greifzange einen oder mehrere Gegenstände ergreifen kann.

Durch die erfindungsgemäße Kopplung des Hubelements mit den Greifarmen ergibt sich eine konstruktiv einfache und kompakte Bauform der Greifzange, besonders mit Blick auf die Baulänge der Greifzange. Dadurch ist die Greifzange im Einsatz schnell und einfach in einem Leitungssystem führbar. Insbesondere weist die Greifzange in richtungsändernden Leitungspassagen, beispielsweise in Kurven, Krümmungen, Abzweigen oder dergleichen, eine verbesserte Führbarkeit und somit insgesamt eine vereinfachte Handhabbarkeit auf.

Das Hubelement ist mit dem Kolben verbunden. Das Hubelement und der Kolben sind bevorzugt miteinander gemeinsam verschiebbar. Das Hubelement ist mit dem Kolben vorzugsweise entlang der Mittelachse des Gehäuses bewegbar. Das Hubelement ist vorzugsweise auf der Mittelachse des Gehäuses liegend angeordnet. Besonders bevorzugt ist das Hubelement mit dem Kolben fest, insbesondere verschiebefest, verbunden. Das Hubelement kann mit dem Kolben formschlüssig, stoffschlüssig und/oder kraftschlüssig verbunden sein. Das Hubelement kann mit dem Kolben direkt oder indirekt verbunden sein. Vorzugsweise ist der Kolben über das Hubelement mit den Greifarmen mechanisch gekoppelt.

Das Gehäuse der Greifzange nimmt den Kolben auf. Dazu weist das Gehäuse bevorzugt einen Kolbenarbeitsraum auf, in dem der Kolben verschiebbar angeordnet ist. Das Gehäuse ist so ausgebildet, dass der Kolben entlang der Mittelachse des Gehäuses längsverschiebbar ist. Mit anderen Worten ist der Kolben in dem Gehäuse in Längsrichtung beweglich angeordnet. Der Kolben unterteilt den Kolbenarbeitsraum bevorzugt in einen ersten Arbeitsbereich und einen zweiten Arbeitsbereich.

Vorzugsweise ist das Gehäuse, insbesondere der Kolbenarbeitsraum, so ausgebildet, dass der Kolben, und insbesondere das Hubelement, entlang der Mittelachse von 0 mm bis 20 mm, insbesondere 0 mm bis 15 mm, insbesondere 0 mm bis 10 mm, verschiebbar ist. Besonders bevorzugt ist das Gehäuse, insbesondere der Kolbenarbeitsraum, so ausgebildet, dass der Kolben, und insbesondere das Hubelement, entlang der Mittelachse von 0 mm bis 8 mm, vorzugsweise zumindest um 6 mm, verschiebbar ist. Diese Hubbewegung des Kolbens reicht aus um die Greifarme von der Offenstellung in die Schließstellung und umgekehrt zu bewegen.

Bei einer Betätigung der Greifzange, das heißt bei einem Überführen der Greifarme von der Offenstellung in die Schließstellung, wird in zumindest einen der Arbeitsbereiche des Kolbenarbeitsraums ein Betätigungsfluid, bevorzugt Druckluft, unter Druck eingefüllt. Der Einsatz eines anderen Betätigungsfluides, beispielsweise von Flüssigkeit, Gas oder dergleichen, ist möglich. Bevorzugt ist die erfindungsgemäß Greifzange aber eine pneumatisch betätigbare Greifzange.

Der Kolben wird mit dem Betätigungsfluid derart druckbeaufschlagt, dass sich der Kolben entlang der Mittelachse von den Greifarmen wegbewegt. Das Hubelement bewegt beziehungsweise schwenkt die Greifarme jeweils um deren Gelenkachsen, sodass sich die Greifarme in die Schließstellung bewegen. Die Greifzange befindet sich dann in der Greifsituation.

Bevorzugt bewegen sich die Greifarme beim Überführen von der Offenstellung in die Schließstellung außerhalb des Gehäuses aufeinander zu. Besonders bevorzugt bewegen sich die Greifarme dabei auf die Mittelachse des Gehäuses zu. Die Greifarme sind vorzugsweise um die Mittelachse, insbesondere gleichmäßig, verteilt in und/oder an dem Gehäuse angeordnet.

Bei einer bevorzugten Ausführungsform ist das Hubelement radial zwischen den Gelenkachsen der Greifarme, insbesondere im betätigten und/oder unbetätigten Zustand der Greifzange, angeordnet. Vorzugsweise ist das Hubelement mit den Greifarmen radial zwischen den Gelenkachsen gekoppelt.

Im betätigten Zustand ist der Kolben mit dem Betätigungsfluid druckbeaufschlagt. Im unbetätigten Zustand wird auf den Kolben kein Druck durch das Betätigungsfluid ausgeübt. Dies schließt nicht aus, dass auf den Kolben beispielsweise zur Positionsrückstellung wenigstens ein Druckmittel wirken kann.

Die Greifzange dient bevorzugt zum Greifen und/oder Entfernen von Gegenständen aus einem Wasser-, insbesondere Abwasser-, Kanal- und/oder Schachtsystem. Die Greifzange ist besonders gut geeignet, um in Leitungen, insbesondere Rohrleitungen, eingeführt zu werden und Gegenstände, wie zum Beispiel Ablagerungen, Verschmutzungen, feine und/oder grobe Feststoffe, zu entfernen. Alternativ ist es möglich, dass die Greifzange für andere Greiftätigkeiten, beispielsweise außerhalb von solchen Systemen oder von Leitungen, zum Einsatz kommen kann.

Bei einer bevorzugten Ausführungsform weisen die Greifarme wenigstens einen ersten, insbesondere kurzen, Schenkel auf, der zumindest abschnittsweise innerhalb des Gehäuses angeordnet ist und zur Rotation der Greifarme um die Gelenkachse an dem Hubelement formschlüssig geführt ist. Der erste Schenkel bildet hier mit dem Hubelement einen Hebelmechanismus, der die Hubbewegung des Kolbens in eine Rotation der Greifarme um die Gelenkachsen übersetzt. Der Hebelmechanismus ermöglicht einen besonders kompakten Aufbau der Greifzange.

Der erste Schenkel ist vorzugsweise ein kürzerer von wenigstens zwei Schenkeln der Greifarme. Der erste Schenkel der Greifarme verläuft von der Gelenkachse bis zum Hubelement. Der erste Schenkel umfasst vorzugsweise wenigstens ein klauenförmiges Schenkelende, das in das Hubelement eingreift.

Bei einer weiteren bevorzugten Ausführungsform sind die Greifarme L-förmig ausgebildet, wobei wenigstens ein zweiter Schenkel der Greifarme zumindest abschnittsweise, insbesondere größtenteils, außerhalb des Gehäuses zum Greifen eines Gegenstandes verläuft. Der zweite Schenkel der Greifarme verläuft von der Gelenkachse nach außen. Der zweite Schenkel ist bevorzugt länger als der erste Schenkel der Greifarme. Der zweite Schenkel weist ein freies Ende außerhalb des Gehäuses auf. Der zweite Schenkel umfasst vorzugsweis an dem freien Ende eine Hakenform, um beim Greifen einen besseren Halt des Gegenstandes zu realisieren.

Bevorzugt ist das Hubelement an einem ersten Kolbenstangenabschnitt angeordnet, der mit dem Kolben verbunden ist und sich ausgehend von dem Kolben in einer ersten, insbesondere den Greifarmen zugewandten, Richtung entlang der Mittelachse erstreckt. Mit anderen Worten erstreckt sich der erste Kolbenstangenabschnitt in Längsrichtung des Gehäuses auf die Greifarme zu. Der erste Kolbenstangenabschnitt ist vorzugsweise ein länglicher Fortsatz, auf dem das Hubelement angeordnet ist. Es ist von Vorteil, wenn der erste Kolbenstangenabschnitt ein zylindrischer Fortsatz ist. Dies ermöglicht eine verbesserte Führung des Kolbens bei einer Hubbewegung.

Vorzugsweise ist das Hubelement mit dem ersten Kolbenstangenabschnitt verschiebefest verbunden. Das Hubelement kann mit dem ersten Kolbenstangenabschnitt stoffschlüssig, formschlüssig und/oder kraftschlüssig verbunden sein. Besonders bevorzugt ist das Hubelement mit dem ersten Kolbenstangenabschnitt verschraubt. Dazu kann zusätzlich das Hubelement mittels eines Klebstoffs und/oder eines Dichtmittels an dem ersten Kolbenstangenabschnitt befestigt sein, um eine dauerhaft starke Verbindung zu erreichen.

Der erste Kolbenstangenabschnitt ist vorzugsweise mit dem Kolben einstückig ausgebildet. Mit anderen Worten sind der Kolben und der erste Kolbenstangenabschnitt monolithisch. Der Kolben ist dadurch einfach beispielsweise als Drehteil herstellbar. Alternativ kann der erste Kolbenstangenabschnitt ein separates Bauteil bilden, der mit dem Kolben verbunden ist. Beispielsweise kann der erste Kolbenstangenabschnitt in den Kolben eingeschraubt sein.

Weiter bevorzugt weist das Hubelement auf einem Außenumfang mehrere Ausnehmungen auf, in die die Greifarme, insbesondere mit den klauenförmigen Schenkelenden, eingreifen. Das Hubelement weist vorzugsweise je Ausnehmung wenigstens ein Führungsteil, insbesondere einen Stift, auf, das quer zur Mittelachse des Gehäuses verläuft und den in die Ausnehmung eingreifenden Greifarm führt. Die Greifzange weist dadurch einen einfachen konstruktiven Aufbau auf.

Der Führungsteil greift bevorzugt in das klauenförmige Schenkelende des ersten Schenkels ein. Das Führungsteil bildet vorzugsweise einen Mitnehmer, der den eingreifenden Greifarm bei einer Hubbewegung des Kolbens derart mitbewegt, dass der Greifarm um seine Gelenkachse dreht. Das Führungsteil erstreckt sich vorzugsweise quer zu Mittelachse des Gehäuses.

Besonders bevorzugt umfasst die Greifzange wenigstens ein erstes Federelement, insbesondere eine erste Kegeldruckfeder, das/die mit dem Hubelement derart zusammenwirkt, dass das Hubelement die Greifarme in einem unbetätigten Zustand des Kolbens in der Offenstellung hält. Das erste Federelement ist vorzugsweise eine erste Rückstellfeder, um den Kolben im unbetätigten Zustand in seine Ausgangsposition zu bewegen und somit die Greifarme von der Schließstellung in die Offenstellung zu überführen. Das erste Federelement kann eine erste Evolutfeder oder eine erste, insbesondere mehrlagige, Wellenfeder sein. Andere Federtypen sind möglich.

Bevorzugt ist das erste Federelement zur Mittelachse des Gehäuses konzentrisch angeordnet. Dadurch wird der Federdruck in das Hubelement homogen verteilt eingeleitet. Zusätzlich trägt dies zur Kompaktheit der Greifzange bei.

Bei einer bevorzugten Ausführungsform ist das erste Federelement auf dem ersten Kolbenstangenabschnitt angeordnet und liegt an dem Hubelement an, um eine Federkraft in Mittelachsrichtung gegen das Hubelement aufzubringen. Das erste Federelement erstreckt sich vorzugsweise um den ersten Kolbenstangenabschnitt. Das erste Federelement vorzugsweise ist so angeordnet, dass dessen Federkraft im betätigten Zustand in eine zur Hubbewegung des Kolbens entgegengesetzte Richtung wirkt.

Vorzugsweise ist wenigstens ein Führungs- und Lagerelement zwischen dem Kolben und dem Hubelement angeordnet, wobei das Führungs- und Lagerelement den/einen Kolbenarbeitsraum des Gehäuses verschließt. Zwischen dem Kolben und dem Führungs- und Lagerelement befindet sich vorzugsweise der erste Arbeitsbereich, in den das Betätigungsfluid zum Schließen der Greifzange eingebracht wird. Das Führungs- und Lagerelement umfasst bevorzugt wenigstens einen Umfangsabschnitt, der in den Kolbenarbeitsraum ragt. Der Umfangsabschnitt liegt an einer Gehäuseinnenwand abdichtend an. Zusätzlich kann wenigstens ein Dichtmittel, beispielsweise ein O-Ring, an dem Umfangsabschnitt angeordnet sein, um die Dichtwirkung zu erhöhen.

Das Führungs- und Lagerelement hat den Vorteil, dass das Gehäuse in zwei Bereich unterteilt ist. In einem ersten Bereich befindet sich je nach Betriebszustand das Betätigungsfluid und in einem zweiten Bereich erfolgt die Übersetzung der Hubbewegung auf die Greifarme. Sollten Wartungstätigkeiten im zweiten Bereich, d.h. zum Beispiel an dem Hubelement, notwendig sein, kann dieser unabhängig vom Kolbenarbeitsraum geöffnet werden. Dadurch wird die Verunreinigung des Kolbenraums verhindert.

Das Führungs- und Lagerelement weist vorzugsweise wenigstens eine Durchgangsöffnung auf, in der der erste Kolbenstangenabschnitt verschiebbar geführt ist. Mit anderen Worten erstreckt sich der erste Kolbenstangenabschnitt vorzugsweise durch die Durchgangsöffnung. Das Führungs- und Lagerelement dient zum Führen des ersten Kolbenstangenabschnitts und somit des Kolbens bei einer Hubbewegung, d.h. im betätigten Zustand. Im unbetätigten Zustand dient das Führungs- und Lagerelement zum Lagern des ersten Kolbenstangenabschnitts beziehungsweise des Kolbens. Bei dieser Ausführungsform ist von Vorteil, dass das Führungs- und Lagerelement durch Funktionsintegration eine kompakte Bauform der Greifzange begünstigt.

Bei einer Ausführungsform weist das Führungs- und Lagerelement wenigstens einen Federsitz, insbesondere eine Vertiefung, auf, an der sich das erste Federelement abstützt. Der Federsitz des Führungs- und Lagerelements bildet hier ein stationäres Widerlager für das erste Federelement. Das erste Federelement stützt sich an dem Federsitz derart ab, dass das Hubelement mit einer bestimmten Federkraft vorgespannt ist. Hier ist von Vorteil, dass das erste Federelement positionsfest an dem Führungs- und Lagerelement angeordnet ist. Die erhöht die Funktionssicherheit des ersten Federelements beziehungsweise verhindert einen unerwünschten Positionsversatz des ersten Federelements.

Bei einer bevorzugten Ausführungsform ist das Führungs- und Lagerelement mit dem Gehäuse kraft- und/oder formschlüssig verbunden. Das Führungs- und Lagerelement kann einen umlaufenden Kragen aufweisen, der mit dem Gehäuse verbunden ist. Insbesondere kann das Führungs- und Lagerelement, insbesondere der Kragen, zumindest abschnittsweise zwischen zwei Gehäuseteilen des Gehäuses angeordnet ist. Das Gehäuse kann somit zumindest zweiteilig ausgebildet sein. Hier ist von Vorteil, dass das Führungs- und Lagerelement auf einfache Weise und platzsparend an beziehungsweise in dem Gehäuse befestigt ist.

Das Gehäuse weist vorzugsweise einen Boden mit wenigstens einer Durchgangsöffnung aufweist, in der ein zweiter, insbesondere von den Greifarmen abgewandter, Kolbenstangenabschnitt verschiebbar geführt ist. Der Kolben ist dadurch stabil entlang der Mittelachse führbar.

Der zweite Kolbenstangenabschnitt erstreckt sich vorzugsweise ausgehend von dem Kolben in einer zweiten, insbesondere den Greifarmen abgewandten, Richtung entlang der Mittelachse. Mit anderen Worten erstreckt sich der zweite Kolbenstangenabschnitt in Längsrichtung des Gehäuses von den Greifarmen weg. Der zweite Kolbenstangenabschnitt ist vorzugsweise ein länglicher Fortsatz, der zumindest abschnittsweise in der Durchgangsöffnung des Bodens angeordnet ist. Es ist von Vorteil, wenn der zweite Kolbenstangenabschnitt ein zylindrischer Fortsatz ist. Dies ermöglicht eine verbesserte Führung des Kolbens bei einer Hubbewegung in dem Gehäuseboden.

Der zweite Kolbenstangenabschnitt ist vorzugsweise mit dem Kolben einstückig ausgebildet. Mit anderen Worten sind der Kolben und der zweite Kolbenstangenabschnitt monolithisch. Der Kolben ist dadurch einfach beispielsweise als Drehteil herstellbar. Alternativ kann der zweite Kolbenstangenabschnitt ein separates Bauteil bilden, der mit dem Kolben verbunden ist. Beispielsweise kann der zweite Kolbenstangenabschnitt in den Kolben eingeschraubt sein.

Das Gehäuse umfasst bevorzugt wenigstens eine Bohrung, die einen zweiten Arbeitsbereich des Kolbenarbeitsraums mit einer Außenumgebung verbindet. Der zweite Arbeitsbereich ist an dem Kolben dem ersten Arbeitsbereich gegenüber angeordnet. Die Bohrung ist vorzugsweise in der Gehäusewand ausgebildet. Die Bohrung hat den Vorteil, dass einerseits beim Betätigen des Kolbens die in dem zweiten Arbeitsbereich befindliche Luft entweichen kann, sodass beim Schließen der Greifarme in dem zweiten Arbeitsbereich gegen den Kolben kein Staudruck entgegenwirkt. Andererseits kann durch die Bohrung Luft von der Außenumgebung in den zweiten Arbeitsbereich des Kolbenarbeitsraums einströmen, wenn der Kolben sich in die Ausgangsstellung bewegt.

Um zu verhindern, dass Schmutz den Kolbenarbeitsraum verunreinigen, ist vorzugsweise an der Bohrung ein Filter angeordnet. Der Filter überdeckt bevorzugt die Bohrung. Der Filter kann ein Sinterfilter sein. Andere Filterarten sind möglich.

Zusätzlich oder alternativ kann die Greifzange wenigstens ein zweites Federelement, insbesondere eine zweite Kegeldruckfeder, aufweisen, das/die mit dem Kolben derart zusammenwirkt, dass das Hubelement die Greifarme in einem unbetätigten Zustand des Kolbens in der Offenstellung hält. Das zweite Federelement unterstützt dabei das erste Federelement, um die Greifarme im unbetätigten Zustand über das Hubelement in der Offenstellung zu halten. Das zweite Federelement ist vorzugsweise eine zweite Rückstellfeder, um den Kolben im unbetätigten Zustand in seine Ausgangsposition zu bewegen und somit die Greifarme von der Schließstellung in die Offenstellung zu überführen. Das zweite Federelement kann eine zweite Evolutfeder oder eine zweite, insbesondere mehrlagige, Wellenfeder sein.

Bevorzugt ist das zweite Federelement zur Mittelachse des Gehäuses konzentrisch angeordnet. Dadurch wird der Federdruck in den Kolben gleichmäßig verteilt eingeleitet. Zusätzlich trägt dies zur Kompaktheit der Greifzange bei.

Bei einer bevorzugten Ausführungsform ist das zweite Federelement auf dem zweiten Kolbenstangenabschnitt angeordnet und liegt an dem Kolben an, um eine Federkraft in Mittelachsrichtung gegen den Kolben aufzubringen. Bevorzugt ist das zweite Federelement in dem Kolbenarbeitsraum angeordnet, wobei das zweite Federelement an dem Kolben anliegt, um eine Federkraft in Mittelachsrichtung gegen den Kolben aufzubringen. Das zweite Federelement erstreckt sich vorzugsweise um den zweiten Kolbenstangenabschnitt. Das zweite Federelement ist vorzugsweise so angeordnet, dass dessen Federkraft im betätigten Zustand in eine zur Hubbewegung des Kolbens entgegengesetzte Richtung wirkt. Die Federkräfte des ersten und zweiten Federelements sind richtungsgleich. Durch die in den Kolbenarbeitsraum angeordnete Lage des zweiten Federelements ist die Kompaktheit der Greifzange zusätzlich erhöht.

Es ist vorzugsweise wenigstens ein Kanal in dem zweiten Kolbenstangenabschnitt und/oder dem Kolben ausgebildet, der einen Anschluss zum Zuführen eines Betätigungsfluides, insbesondere von Druckluft, mit einem/dem ersten Arbeitsbereich des Kolbenarbeitsraums fluidverbindet, der zwischen dem Führungs- und Lagerelement und dem Kolben gebildet ist. Der Kanal bildet vorzugsweise einen Bypass zum zweiten Arbeitsbereich des Kolbenarbeitsraums. Hier ist von Vorteil, dass ein zusätzlicher Kanal zum Zuführen des Betätigungsfluides entfallen kann. Durch Funktionsintegration ist hier die Komplexität der Greifzange verringert.

Vorzugsweise ist wenigstens ein Anschluss zum Zuführen eines Betätigungsfluides, insbesondere von Druckluft, mit dem Gehäuse verbunden, der wenigstens eine umfänglich ausgebildete Formschlusskontur, insbesondere eine Sechskantkontur, aufweist. Der Anschluss ist vorzugsweise mit dem Kanal zur Zuführung des Betätigungsfluides in den ersten Arbeitsbereich des Kolbenarbeitsraums verbunden. Die Formschlusskontur hat den Vorteil, dass eine Torsionskraft beispielsweise durch einen Schlauch auf das Gehäuse und somit die gesamte Greifzange übertragbar ist. Eine Schubfeder kann dadurch entfallen. Die Verwendung einer Luftschiebestang ist möglich.

Es ist von Vorteil, wenn die Greifarme wenigstens eine Schnellverschlusseinrichtung zum Wechseln eines Greifarmabschnitts aufweisen, die außerhalb des Gehäuses angeordnet ist. Dies hat den Vorteil, dass das Schnellverschlusseinrichtung schnell und einfach zugänglich ist, um einen Wechsel des Greifarmabschnitts durchzuführen.

Nach einem nebengeordneten Aspekt betrifft die Erfindung ein Greifsystem mit wenigstens einer erfindungsgemäßen Greifzange und mit wenigstens einer Führungs- und Betätigungseinrichtung, insbesondere einem Schlauch und/oder einer Luftschiebestange, wobei die Führungs- und Betätigungseinrichtung mit einem Anschluss, insbesondere Druckluftanschluss, der Greifzange drehfest verbunden oder verbindbar ist, um ein Drehmoment zu übertragen. Hierbei wird auf die im Zusammenhang mit der Greifzange erläuterten Vorteile verwiesen. Darüber hinaus kann das Greifsystem alternativ oder zusätzlich einzelne oder eine Kombination mehrerer zuvor in Bezug auf die Greifzange genannter Merkmale aufweisen.

Bei einer erfindungsgemäßen Verwendung kommt die erfindungsgemäße Greifzange und/oder das erfindungsgemäße Greifsystems zur Reinigung von Rohrleitungen, insbesondere eines Abwasser- und/oder Kanalsystems, zum Einsatz.

Die Erfindung wird nachstehend mit weiteren Einzelheiten unter Bezug auf die beigefügten Zeichnungen näher erläutert. Die dargestellten Ausführungsformen stellen Beispiele dar, wie die erfindungsgemäße Greifzange beziehungsweise das erfindungsgenmäße Greifsystem ausgestaltet sein kann.

In diesen zeigen,
- Fig. 1: eine perspektivische Ansicht einer Greifzange nach einem bevorzugten erfindungsgemäßen Ausführungsbeispiel;
- Fig. 2: eine Seitenansicht der Greifzange nach Fig. 1;
- Fig. 3: einen Längsschnitt durch die Greifzange nach Fig. 1;
- Fig. 4: eine perspektivische Ansicht eines Greifsystems mit einer Greifzange nach einem weiteren erfindungsgemäßen Ausführungsbeispiel; und
- Fig. 5: einen Längsschnitt durch die Greifzange nach Fig. 4.

In der folgenden Beschreibung werden für gleiche oder gleichwirkende Teile dieselben Bezugsziffern verwendet.

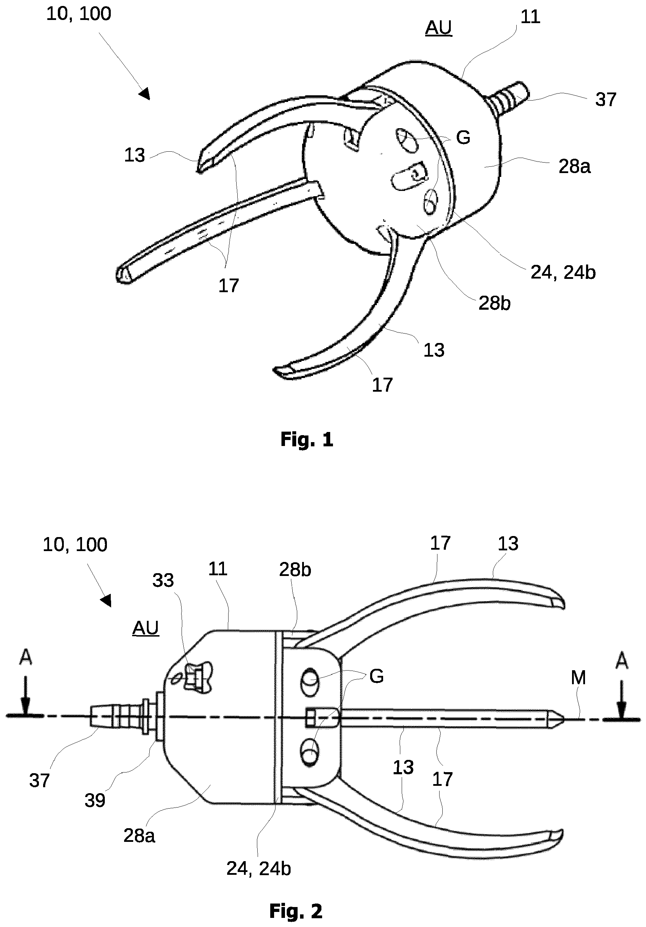

Die Fig. 1 bis 3 zeigen eine Greifzange 10 zum Greifen von Gegenständen nach einem bevorzugten erfindungsgemäßen Ausführungsbeispiel. Die Greifzange 10 kommt bevorzugt zur Reinigung von Leitungen in Abwasser-, Kanal- und/oder Schachtsystemen zum Einsatz. Andere Einsatzgebiete, insbesondere außerhalb von Leitungen, sind möglich. Bei der Greifzange 10 gemäß den Fig. 1 bis 3 handelt es sich um eine pneumatisch betätigbare Greifzange.

Die Greifzange 10 weist ein Gehäuse 11, einen Kolben 12 und mehrere Greifarme 13 auf. Auf die Greifarme 13 wird später näher eingegangen. Der Kolben 12 ist in dem Gehäuse 11 aufgenommen. Das Gehäuse 11 weist eine Mittelachse M auf, entlang der der Kolben 12 verschiebbar angeordnet ist. Das Gehäuse 11 ist zweiteilig ausgebildet. Das Gehäuse 11 umfasst ein erstes Gehäuseteil 28a als Basis. Des Weiteren weist das Gehäuse 11 ein zweites Gehäuseteil 28b als Deckel auf. Das erste Gehäuseteil ist mit dem zweiten Gehäuseteil fest verbunden. Konkret ist der Deckel mit der Basis des Gehäuses 11 verschraubt. Das Gehäuse 11 ist im Wesentlichen außenumfänglich rund ausgebildet.

Das Gehäuse 11 weist vorzugsweise einen maximalen Durchmesser Dₘₐₓ von 40 mm bis 60 mm, besonders bevorzugt von 50, mm auf. Zusätzlich weist das Gehäuse 11 von Stirnseite zu Stirnseite bevorzugt eine Länge L von 40 mm bis 60 mm, besonders bevorzugt von zirka 51 mm, auf.

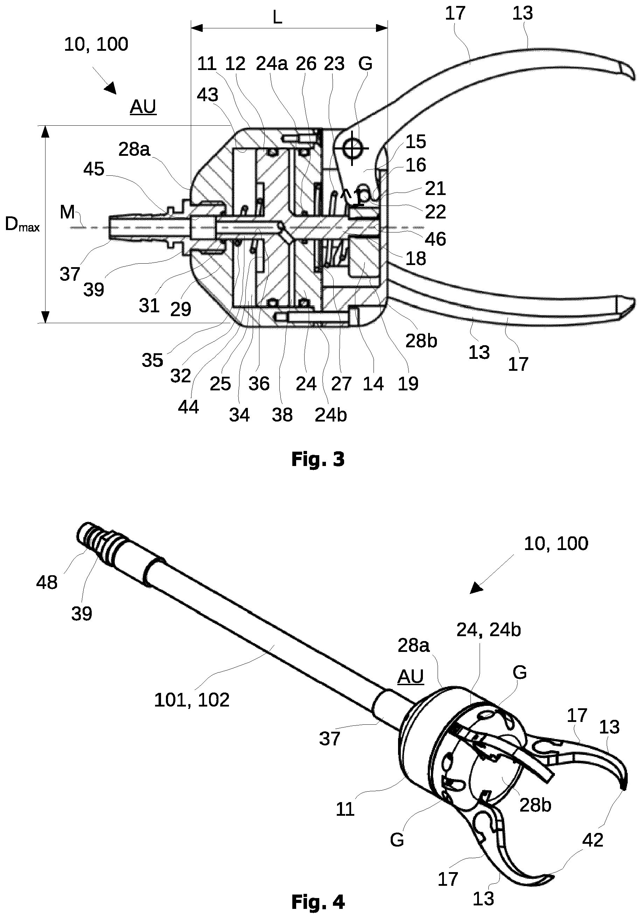

Wie in Fig. 3 gut zu erkennen ist, ist der Kolben 12 in dem ersten Gehäuseteil 28a, insbesondere der Basis, aufgenommen. Das erste Gehäuseteil 28a weist dazu einen Kolbenarbeitsraum 25 auf, in dem der Kolben 12 verschiebbar angeordnet ist. Der Kolben 12 unterteilt den Kolbenarbeitsraum 25 in einen ersten Arbeitsbereich 38 und einen zweiten Arbeitsbereich 34.

Der Kolben 12 ist scheibenförmig ausgebildet. Mit anderen Worten ist der Kolben 12 plattenförmig, insbesondere flach, ausgebildet. Der Kolben 12 weist bevorzugt zylindrisch ausgebildet. Der Kolben 12 umfasst nimmt an dessen Umfang ein Dichtmittel, insbesondere einen O-Ring, auf, um den Kolben 12 gegen das Gehäuse 11 abzudichten.

Wie in Fig. 3 zu sehen ist, sind ein erster Kolbenstangenabschnitt 18 und ein zweiter Kolbenstangenabschnitt 32 an dem Kolben 12 vorgesehen. Konkret sind der erste und zweite Kolbenstangenabschnitt 18, 32 mit dem Kolben 12 einstückig ausgebildet. Das bedeutet, dass der Kolben 12 und die beiden Kolbenstangenabschnitte 18, 32 aus einem Stück gebildet sind.

Die beiden Kolbenstangenabschnitte 18, 32 erstrecken sich entlang der Mittelachse M des Gehäuses 11. Der erste Kolbenstangenabschnitt 18 erstreckt sich in Richtung der Greifarme 13 und der zweite Kolbenstangenabschnitt 32 erstreckt sich in eine zu dem ersten Kolbenstangenabschnitt 18 entgegengesetzte Richtung. Die beiden Kolbenstangenabschnitte 18, 32 sind an dem Kolben 12 gegenüber angeordnet und erstrecken sich in entgegengesetzte Richtungen.

Gemäß Fig. 3 bilden die Kolbenstangenabschnitte 18, 32 jeweils einen zylindrischen Fortsatz. Der erste Kolbenstangenabschnitt 18 erstreckt sich durch den ersten Arbeitsbereich 38 des Kolbenarbeitsraums 25. Der zweite Kolbenstangenabschnitt 32 erstreckt sich durch den zweiten Arbeitsbereich 34 des Kolbenstangenraums 25. Die beiden Kolbenstangenabschnitte 18, 32 liegen auf der Mittelachse M des Gehäuses 11.

Die Greifzange 10 weist des Weiteren ein Hubelement 14 auf, das mit dem Kolben 13 über den ersten Kolbenstangenabschnitt 38 verschiebefest verbunden ist. Das heißt, dass das Hubelement 14 mit dem Kolben 12 verschiebbar ist. Konkret ist das Hubelement 14 an einem von dem Kolben 13 abgewandten Längsende des ersten Kolbenstangenabschnitts 38 angeordnet. Das Hubelement 14 liegt auf der Mittelachse M des Gehäuses 11. Das Hubelement 14 ist mit dem ersten Kolbenstangenabschnitt 38 verschraubt. Konkret weist der erste Kolbenstangenabschnitt 38 ein Außengewinde und das Hubelement 14 ein Innengewinde auf, welches in das Außengewinde des ersten Kolbenstangenabschnitts 38 eingreift. Zusätzlich kann die Schraubverbindung zwischen dem Hubelement 14 und dem ersten Kolbenstangenabschnitt 38 mittels eines Klebstoffs gesichert sein.

Das Hubelement 14 ist scheibenförmig ausgebildet. Mit anderen Worten ist das Hubelement 14 plattenförmig, insbesondere als Flachmaterial, ausgebildet. Das Hubelement 14 weist auf einem Außenumfang 19 mehrere Ausnehmungen 21 auf, in die die Greifarme 13 eingreifen. Konkret weist das Hubelement 14 je Greifarm 13 eine solche Ausnehmung 21 auf, in die der Greifarm 13 teilweise einragt. Die Ausnehmungen 21 sind durch Schlitze gebildet, die das Hubelement 14 parallel zur Mittelachse M des Gehäuses 11 durchdringen. Mit anderen Worten sind die Ausnehmungen 21 jeweils radial nach außen offen und bilden einen Durchgang in Längsrichtung des Gehäuses 11. Insgesamt weist das Hubelement 14 drei Ausnehmungen 21 auf, da die Greifzange 10 drei Greifarme 13 umfasst, wie in den Fig. 1 und 2 erkennbar ist.

Das Hubelement 14 weist je Ausnehmung 21 ein Führungsteil 22 in Form eines Stiftes auf. Der Stift ist quer zur Mittelachse M des Gehäuses 11 in der Ausnehmung 21 angeordnet. Konkret erstreckt sich der Stift quer zur Mittelachse M durch die Ausnehmung 21. Der Stift bildet einen Mitnehmer, der den eingreifenden Greifarm 13 bei einer Hubbewegung des Kolbens 12 um seine Gelenkachse G verschwenkt. Der Stift dient also zum Mitführen des eingreifenden Greifarms 13 bei einer Hubbewegung des Kolbens 12. Die Mitführbewegung beziehungsweise die Schwenkbewegung des Greifarms 13 ist parallel zur Hubbewegung des Kolbens 12.

Die Greifarme 13 sind im Wesentlichen L-förmig ausgebildet. Konkret weisen die Greifarme 13 einen ersten Schenkel 15 und einen zweiten Schenkel 17 auf. Der erste Schenkel 15 ist innerhalb des Gehäuses 11, insbesondere des Deckels des Gehäuses 11, angeordnet. Der zweite Schenkel 17 ist größtenteils außerhalb des Gehäuses 11, insbesondere des Deckels, angeordnet. Der erste Schenkel 15 ist kürzer als der zweite Schenkel 17. Oder anders gesagt, ist der zweite Schenkel 17 länger als der erste Schenkel 15.

Der erste Schenkel 15 erstreckt sich von der Gelenkachse G bis zum Hubelement 14 und greift mit einem klauenförmigen Schenkelende 16 in eine der Ausnehmungen 21 des Hubelements 14 ein. Mit anderen Worten weist der kurze Schenkel 15 des jeweiligen Greifarms 13 ein Schenkelende 16 mit einer Gabelform auf, die in die Ausnehmung 21 des Hubelements 14 eingreift. Dabei erstreckt sich das Führungsteil 22, insbesondere der Stift, des Hubelements 14 durch einen zwischen zwei Klauen des Schenkelendes 16 gebildeten Spalt. Das Hubelement 14 ist somit mit den Greifarmen 13 zum Führen formschlüssig gekoppelt.

Bei einer Hubbewegung des Kolbens 12 entlang der Mittelachse M führt das Führungsteil 22 den eingreifenden Greifarm 13 über den Eingriff in den Spalt derart mit, dass der Greifarm 13 um seine Gelenkachse G dreht. Je nach Richtung der Hubbewegung des Kolbens 12 werden die Greifarme 13 von der Offenstellung in die Schließstellung oder umgekehrt bewegt.

Wie in Fig. 3 zu sehen ist, ist das Hubelement 14 radial zwischen den Gelenkachsen G der Greifarme 13 angeordnet. Die Greifzange 10 weist insgesamt drei Greifarme 13 auf, die um die Mittelachse M des Gehäuses 11 verteilt angeordnet sind. Mit anderen Worten sind die Greifarme 13 in Umfangsrichtung des Gehäuses 11 verteilt und radial in Bezug auf die Mittelachse M außenliegend angeordnet. Die Greifzange 10 kann alternativ auch zwei oder mehr als drei Greifarme 13 aufweisen. Die Gelenkachsen G der Greifarme 13 sind im Bereich eines Außenumfangs des Gehäuses 11 angeordnet. Die Gelenkachsen G sind quer zur Mittelachse M des Gehäuses 11 ausgerichtet.

Die Greifzange 10 weist ferner ein Führungs- und Lagerelement 24 auf, das zwischen dem Kolben 12 und dem Hubelement 14 angeordnet ist. Das Führungsund Lagerelement 24 verschließt den ersten Arbeitsbereich 38 des Kolbenarbeitsraums 25 des Gehäuses 11. Mit anderen Worten befindet sich zwischen dem Kolben 12 und dem Führungs- und Lagerelement 24 der erste Arbeitsbereich 38, in den das Betätigungsfluid zum Schließen der Greifzange 10 eingebracht wird. Das Führungs- und Lagerelement 24 umfasst einen Umfangsabschnitt 24a, der in den ersten Arbeitsbereich 38 des Kolbenarbeitsraums 25 ragt. Der Umfangsabschnitt 24a liegt an einer Gehäuseinnenwand 43 des Gehäuses 11, insbesondere des ersten Gehäuseteils 28a, abdichtend an. Zusätzlich nimmt der Umfangsabschnitt 24a ein Dichtmittel, insbesondere einen O-Ring, auf, um die Dichtwirkung zu erhöhen.

Das Führungs- und Lagerelement 24 weist eine Durchgangsöffnung 26 auf, in der der erste Kolbenstangenabschnitt 18 verschiebbar geführt ist. Mit anderen Worten erstreckt sich der erste Kolbenstangenabschnitt 18 durch die Durchgangsöffnung 26. Das Führungs- und Lagerelement 24 weist ein Dichtmittel, insbesondere einen O-Ring, auf, der in der Durchgangsöffnung 26 angeordnet ist und an dem ersten Kolbenstangenabschnitt 18 abdichtend anliegt. Das Führungsund Lagerelement 24 dient zum Führen des ersten Kolbenstangenabschnitts 18 und somit des Kolbens 12 bei einer Hubbewegung, d.h. im betätigten Zustand. Im unbetätigten Zustand dient das Führungs- und Lagerelement 24 zum Lagern des ersten Kolbenstangenabschnitts 18 beziehungsweise des Kolbens 12.

Wie in Fig. 3 gezeigt ist, weist das Führungs- und Lagerelement 24 einen Federsitz 27 auf, an der sich ein erstes Federelement 23 abstützt. Der Federsitz 27 des Führungs- und Lagerelements bildet ein stationäres Widerlager für das erste Federelement 23. Das erste Federelement 23 stützt sich an dem Federsitz 27 derart ab, dass das Hubelement 14 mit einer bestimmten Federkraft vorgespannt ist. Auf das erste Federelement 23 wird später näher genauer eingegangen.

Das Führungs- und Lagerelement 24 ist mit dem Gehäuse 11 kraft- und/oder formschlüssig verbunden. Das Führungs- und Lagerelement 24 weist einen umlaufenden Kragen 24b auf, der mit dem Gehäuse 11 verbunden ist. Konkreter ist das Kragen 24b zwischen den beiden Gehäuseteilen 28a, 28b des Gehäuses 11 angeordnet.

Wie vorstehend beschrieben, weist die Greifzange 10 ein erstes Federelement 23 auf, das mit dem Hubelement 14 zusammenwirkt. Das erste Federelement 23 leitet in das Hubelement 14 eine Federkraft derart ein, dass die Greifarme 13 in einem unbetätigten Zustand des Kolbens 12 in der Offenstellung gehalten sind. Das erste Federelement 23 ist auf dem ersten Kolbenstangenabschnitt 18 zwischen dem Führungs- und Lagerelement 24 und dem Hubelement 14 angeordnet. Das erste Federelement 23 sitzt in den Federsitz 27 des Führungsund Lagerelements 24 ein und stützt sich daran ab. Das erste Federelement 23 ist, wie in Fig. 3 gut erkennbar, eine erste Kegeldruckfeder. Die erste Kegeldruckfeder ist so ausgerichtet, dass ein Kegelspitze der Kegeldruckfeder an einer Anlagefläche des Hubelements 14 anliegt.

Zusätzlich weist die Greifzange 10 ein zweites Federelement 35 auf, das in dem zweiten Arbeitsbereich 34 des Kolbenarbeitsraums 25 angeordnet ist. Konkret ist das zweite Federelement 35 zwischen dem Kolben 12 und einem Boden 29 des ersten Gehäuseteils 28a angeordnet. Das zweite Federelement 35 wirkt mit dem Kolben 12 zusammen. Das zweite Federelement 35 leitet in den Kolben 12 eine Federkraft derart ein, dass die Federkraft des ersten Federelements 23 ergänzt wird. Da das Hubelement 14 mit dem Kolben 12 über den ersten Kolbenstangenabschnitt 18 starr verbunden ist, wird die Federkraft des zweiten Federelements 35 auch auf das Hubelement 14 übertragen.

Das zweite Federelement 35 dient also dazu, wie das erste Federelement 23, die Greifarme 13 in einem unbetätigten Zustand des Kolbens 12 in der Offenstellung zu halten. Das zweite Federelement 35 ist auf dem zweiten Kolbenstangenabschnitt 32 angeordnet. Das zweite Federelement 35 sitzt in einen Federsitz 44 des Kolbens 12 ein und stützt sich daran ab. Das zweite Federelement 35 ist, wie in Fig. 3 gut erkennbar, eine zweite Kegeldruckfeder. Die zweite Kegeldruckfeder ist so ausgerichtet, dass ein Kegelspitze der Kegeldruckfeder an einer Anlagefläche des Bodens 29 des Gehäuses 11 anliegt.

Die beiden Federelemente 23, 35 sind so angeordnet, dass deren Federkräfte im betätigten Zustand des Kolbens 12 in eine zur Hubbewegung des Kolbens 12 entgegengesetzte Richtung wirken. Die Federelemente 23, 35 dienen also im unbetätigten Zustand zur Rückstellung des Kolbens 12 in seine Ausgangslage und somit zum Überführen der Greifarme 13 von der Schließstellung in die Offenstellung. Die Federkräfte des ersten und zweiten Federelements 23, 35 sind also richtungsgleich.

Der Boden 29 des Gehäuses 11 weist eine Durchgangsöffnung 31 auf, die konzentrisch zur Mittelachse M ist. In der Durchgangsöffnung 31 ist der zweite Kolbenstangenabschnitt 32 teilweise angeordnet. Der zweite Kolbenstangenabschnitt 32 ragt mit einem von dem Kolben 12 abgewandten Endbereich in die Durchgangsöffnung 31 des Bodens 29. Der Boden 29 ist Teil des ersten Gehäuseteils 28a. Konkret greift der zweite Kolbenstangenabschnitt 32 in die Durchgangsöffnung 31 verschiebbar ein. Mit anderen Worten ist der zweite Kolbenstangenabschnitt 32 in der Durchgangsöffnung 31 längsbeweglich geführt.

Die Greifzange 10 weist des Weiteren einen Anschluss 37 für eine Führungs- und Betätigungseinrichtung auf. Der Anschluss 37 ist im vorliegenden Beispiel als Anschlussnippel ausgebildet, der in den Boden 29 des Gehäuses 11 eingeschraubt ist. Der Anschlussnippel umfasst einen Durchgang 45, in dem der zweite Kolbenstangenabschnitt 32 verschiebbar geführt ist. Der zweite Kolbenstangenabschnitt 32 greift mit seinem Endbereich in den Durchgang 45 teilweise ein. Der Durchgang 45 liegt auf der Mittelachse M des Gehäuses 11 und ist mit dem zweiten Kolbenstangenabschnitt 32 konzentrisch.

Der Anschluss 37 weist eine umfänglich ausgebildete Formschlusskontur auf. Die Formschlusskontur ist eine Sechskantkontur 39. Der Anschluss 37 ist derart mit dem Boden 29 des Gehäuses 11 verbunden, dass über die Sechskantkontur 39 eine Torsionskraft in das Gehäuse 11 einleitbar ist. Dies dient zum Drehen der Greifzange 10 um die Mittelachse M.

Generell dient der Anschluss 37 zum Zuführen eines Betätigungsfluides, das im vorliegenden Fall Druckluft ist, sowie zum Drehen der Greifzange 10. Beim Betätigen des Kolbens 12 wird Druckluft durch den Anschluss 37 eingeleitet. Der zweite Kolbenstangenabschnitt 32 weist einen integrierten Kanal 36 auf, der den Durchgang 45 des Anschlusses 37 mit dem ersten Arbeitsbereich 38 des Kolbenarbeitsraums 25 fluidverbindet. Bei einer Betätigung wird also die Druckluft von dem Anschluss 37 durch den Kanal 36 in den ersten Arbeitsbereich 38 des Kolbenarbeitsraums 25 eingebracht.

Dadurch wirkt in dem ersten Arbeitsbereich 38 eine Druckkraft auf den Kolben 12, die den Kolben 12 und somit das Hubelement 14 in eine von den Greifarmen 13 wegführende Richtung entlang der Mittelachse M des Gehäuses 11 bewegt. Dies entspricht einer von den Greifarmen 13 wegführenden Hubbewegung des Kolbens 12. Das erste und zweite Federelement 23, 35 wird bei dieser Hubbewegung durch den Kolben 12 beziehungsweise das Hubelement 14 komprimiert.

Damit die in dem zweiten Arbeitsbereich 34 befindliche Luft bei einer solchen Hubbewegung entweichen kann, weist das Gehäuse 11, insbesondere das erste Gehäuseteil 28a, eine Bohrung 33 auf, die den zweiten Arbeitsbereich 34 des Kolbenarbeitsraums 25 mit einer Außenumgebung AU verbindet. Die Bohrung 33 ist in Fig. 2 gut erkennbar. Bevorzugt ist an der Bohrung 33 ein Filter angeordnet, der bei einer Rückstellung des Kolbens 12 in seine Ausgangsposition das Ansaugen von Schmutz verhindert. Der Filter kann ein Sinterfilter sein.

Durch die formschlüssige Kopplung des Hubelements 14 mit den Greifarmen 13 werden diese um die Gelenkachsen G derart verschwenkt, dass die Greifarme 13 von einer Offenstellung in eine Schließstellung überführt werden. Dabei bewegen sich die zweiten Schenkel 17 der Greifarme 13 außerhalb des Gehäuses 11 aufeinander zu.

Solange durch den Anschluss 37 Druckluft dem ersten Arbeitsbereich 38 zugeführt und somit der Kolben 12 druckbeaufschlagt ist, befinden ich die Greifarme 13 in der Schließstellung. Wird nun keine Druckluft mehr zugeführt, das heißt, wirkt in dem ersten Arbeitsbereich 38 kein Druck mehr auf den Kolben 12, bewegen die komprimierten Federelemente 23, 35 den Kolben 12 sowie das Hubelement 14 wieder in deren Ausgangsposition. Dies kann lediglich im unbetätigten Zustand erfolgen. Das erste und zweite Federelement 23, 35 sind jeweils eine Rückstellfeder. Um eine zu den Greifarmen 13 hinführende Hubbewegung des Kolbens 12 beziehungsweise des Hubelements 14 im unbetätigten Zustand des Kolbens 12 zu begrenzen, weist das Gehäuse 11, insbesondere das zweite Gehäuseteil 28b, eine innenseitige Anschlagfläche 46 auf, an der das Hubelement 14 in der Ausgangsposition anliegt (siehe Fig. 3).

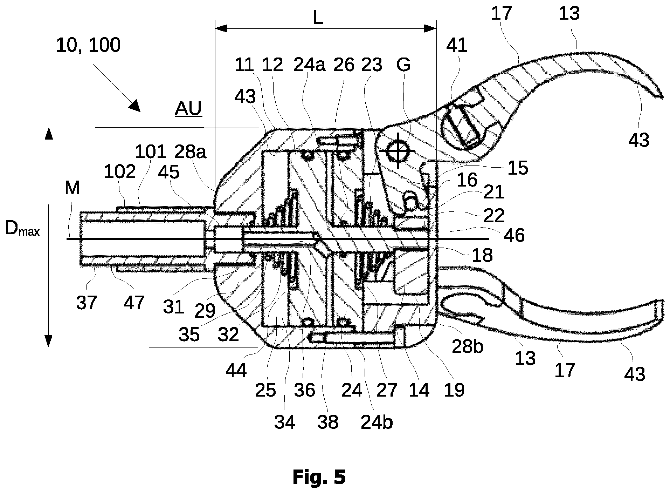

Gemäß den Fig. 4 und 5 ist ein Greifzange 10 nach einem weiteren erfindungsgemäßen Ausführungsbeispiel gezeigt, die sich von der Greifzange 10 gemäß Fig. 1 bis 3 lediglich in der Gestalt des Anschluss 37 sowie der zweiten Schenkel 17 der Greifarme 13 unterscheidet. Alle übrigen vorstehend beschriebenen Merkmale der Greifzange 10 gemäß Fig. 1 bis 3 weist auch die Greifzange 10 gemäß Fig. 4 und 5 auf. Ebenfalls erfolgt die Betätigung der Greifzange 10 gemäß Fig. 4 und 5 wie vorstehend beschrieben.

Der Anschluss 37 der Greifzange 10 gemäß Fig. 4 und 5 weist einen zylindrischen Abschnitt 47 zur Aufnahme eines Schlauches 102 auf. Der Anschluss 37 weist im Unterschied zur Greifzange 10 gemäß Fig. 1 und 3 keine Formschlusskontur in Form einer Sechskantkontur auf. Die Greifzange 10 gemäß Fig. 4 und 5 weist einen weiteren Anschluss 48 auf, der dem Anschluss 37 an dem Schlauch 102 gegenüber angeordnet ist. Der weitere Anschluss 48 ist mit dem Schlauch 102 fluidverbunden. Der weitere Anschluss 48 umfasst eine umfänglich ausgebildete Formschlusskontur, konkret eine Sechskantkontur 39.

Der Schlauch 102 ist Teil einer Führungs- und Betätigungseinrichtung 101, die die Greifzange 10 im Einsatz durch eine Leitung führt und bei Bedarf der Greifzange 10 Druckluft zur Betätigung des Kolbens 12 zuführt, um die Greifarme 13 zu schließen.

Die Kombination aus Greifzange 10 und der Führungs- und Betätigungseinrichtung 101 bilden ein Greifsystem 100, das beispielsweise in Fig. 4 gezeigt ist.

Ferner sind im Unterschied zur Greifzange 10 gemäß Fig. 1 bis 3 die Greifarme 13 geteilt ausgebildet. Konkret ist der zweite Schenkel 17 der Greifarme zweigeteilt. Der zweite Schenkel 17 umfasst eine Schnellverschlusseinrichtung 41, durch die ein Greifarmabschnitt 42 des zweiten Schenkels 17 auswechselbar gehalten ist. Das Schnellverschlusssystem 41 ist in den zweiten Schenkel 17 integriert. Das Schnellverschlusssystem 17 umfasst, wie in Fig. 5 gezeigt, eine Feder und einen Pin, der den auswechselbaren Greifarmabschnitt 42 formschlüssig fixiert. Der Pin ist durch die Feder in eine Formschlussöffnung eingeführt. Um den Greifarmabschnitt 42 zu wechseln, muss der Pin per Hand gegen die Federkraft der Feder bewegt werden, sodass die Formschlussverbindung gelöst wird.

An dieser Stelle wird darauf hingewiesen, dass einzelne oder mehrere Merkmale der beiden Ausführungsbeispiele der Greifzange 10 gemäß der Fig. 1 bis 3 sowie der Fig. 4 und 5 frei untereinander kombinierbar sind. Beispielsweise kann auch die Greifzange 10 gemäß Fig. 1 bis 3 wenigstens einen auswechselbaren Greifarmabschnitt 42 aufweisen.

### Bezuaszeichenliste

- 10: Greifzange
- 11: Gehäuse
- 12: Kolben
- 13: Greifarme
- 14: Hubelement
- 15: erster Schenkel der Greifarme
- 16: klauenförmiges Schenkelende
- 17: zweiter Schenkel der Greifarme
- 18: erster Kolbenstangenabschnitt
- 19: Außenumfang des Hubelements
- 21: Ausnehmungen
- 22: Führungsteil
- 23: erstes Federelement
- 24: Führungs- und Lagerelement
- 24a: Umfangsabschnitt des Führungs- und Lagerelements
- 24b: umlaufender Kragen
- 25: Kolbenarbeitsraum
- 26: Durchgangsöffnung des Führungs- und Lagerelement
- 27: Federsitz des Führungs- und Lagerelement
- 28a: erster Gehäuseteil
- 28b: zweiter Gehäuseteil
- 29: Boden
- 31: Durchgangsöffnung des Bodens
- 32: zweiter Kolbenstangenabschnitt
- 33: Bohrung
- 34: zweiter Arbeitsbereich
- 35: zweites Federelement
- 36: Kanal
- 37: Anschluss
- 38: erster Arbeitsbereich
- 39: Sechskantkontur
- 41: Schnellverschlusseinrichtung
- 42: auswechselbarer Greifarmabschnitt
- 43: Gehäuseinnenwand
- 44: Federsitz des Kolbens
- 45: Durchgang des Anschlusses/weiteren Anschlusses
- 46: innenseitige Anschlagfläche
- 47: zylindrischer Abschnitt
- 48: weiterer Anschluss
- 100: Greifsystem
- 101: Führungs- und Betätigungseinrichtung
- 102: Schlauch
- M: Mittelachse
- G: Gelenkachse
- AU: Außenumgebung
- L: Länge des Gehäuses
- Dₘₐₓ: maximaler Durchmesser des Gehäuses

## Patentansprüche

1. Greifzange (10) zum Greifen von Gegenständen, insbesondere in einem Kanalsystem, mit
- wenigstens einem Gehäuse (11) mit einer Mittelachse (M);
- wenigstens einem Kolben (12), der in dem Gehäuse (11) entlang der Mittelachse (M) verschiebbar angeordnet ist; und
- mehreren Greifarmen (13), die jeweils in und/oder an dem Gehäuse (11) um eine Gelenkachse (G) schwenkbar gelagert sind,
**gekennzeichnet durch,**
wenigstens ein mit dem Kolben (12) verbundenes Hubelement (14), das mit den Greifarmen (13) derart gekoppelt ist, dass sich bei einer von den Greifarmen (13) wegführenden Hubbewegung des Kolbens (12) die Greifarme (13) von einer Offenstellung in eine Schließstellung bewegen.

2. Greifzange (10) nach Anspruch 1,
**dadurch gekennzeichnet, dass**
die Greifarme (13) wenigstens einen ersten, insbesondere kurzen, Schenkel (15) aufweisen, der zumindest abschnittsweise innerhalb des Gehäuses (11) angeordnet ist und zur Rotation der Greifarme (13) um die Gelenkachse (G) an dem Hubelement (14) formschlüssig geführt ist, wobei der erste Schenkel (15) vorzugsweise wenigstens ein klauenförmiges Schenkelende (16) aufweist, in das das Hubelement (14) eingreift.

3. Greifzange (10) nach Anspruch 1 oder 2,
**dadurch gekennzeichnet, dass**
die Greifarme (13) L-förmig ausgebildet sind, wobei wenigstens ein zweiter, insbesondere langer, Schenkel (17) der Greifarme (13) zumindest abschnittsweise, insbesondere größtenteils, außerhalb des Gehäuses (11) zum Greifen eines Gegenstandes verläuft.

4. Greifzange (10) nach einem der vorhergehenden Ansprüche,
**dadurch gekennzeichnet, dass**
das Hubelement (14) an einem ersten Kolbenstangenabschnitt (18) angeordnet ist, der mit dem Kolben (12) verbunden ist und sich ausgehend von dem Kolben (12) in einer ersten, insbesondere den Greifarmen (13) zugewandten, Richtung entlang der Mittelachse (M) erstreckt.

5. Greifzange (10) nach einem der vorhergehenden Ansprüche, insbesondere nach einem der Ansprüche 2 bis 4,
**dadurch gekennzeichnet, dass**
das Hubelement (14) auf einem Außenumfang (19) mehrere Ausnehmungen (21) aufweist, in die die Greifarme (13), insbesondere mit den klauenförmigen Schenkelenden (16), eingreifen, wobei das Hubelement (14) vorzugsweise je Ausnehmung (21) wenigstens ein Führungsteil (22), insbesondere einen Stift, aufweist, der quer zur Mittelachse (M) des Gehäuses (11) verläuft und den in die Ausnehmung (21) eingreifenden Greifarm (13) führt.

6. Greifzange (10) nach einem der vorhergehenden Ansprüche,
**dadurch gekennzeichnet, dass**
wenigstens ein erstes Federelement (23), insbesondere eine erste Kegeldruckfeder, vorgesehen ist, das/die mit dem Hubelement (14) derart zusammenwirkt, dass das Hubelement (14) die Greifarme (13) in einem unbetätigten Zustand des Kolbens in der Offenstellung hält, wobei das erste Federelement (23) vorzugsweise auf dem ersten Kolbenstangenabschnitt (18) angeordnet ist und an dem Hubelement (14) anliegt, um eine Federkraft in Mittelachsrichtung gegen das Hubelement (14) aufzubringen.

7. Greifzange (10) nach einem der vorhergehenden Ansprüche,
**dadurch gekennzeichnet, dass**
wenigstens ein Führungs- und Lagerelement (24) zwischen dem Kolben (12) und dem Hubelement (14) angeordnet ist, wobei das Führungs- und Lagerelement (24) einen Kolbenarbeitsraum (25) des Gehäuses (11) verschließt.

8. Greifzange (10) nach Anspruch 7,
**dadurch gekennzeichnet, dass**
das Führungs- und Lagerelement (24) wenigstens eine Durchgangsöffnung (26) aufweist, in der der erste Kolbenstangenabschnitt (18) verschiebbar geführt ist, und/oder das Führungs- und Lagerelement (24) wenigstens einen Federsitz (27), insbesondere eine Vertiefung, aufweist, an der sich das erste Federelement (23) abstützt.

9. Greifzange (10) nach Anspruch 7 oder 8,
**dadurch gekennzeichnet, dass**
das Führungs- und Lagerelement (24) mit dem Gehäuse (11) kraftund/oder formschlüssig verbunden ist, wobei insbesondere das Führungsund Lagerelement (24) zumindest abschnittsweise zwischen zwei Gehäuseteilen (28a, 28b) des Gehäuses (11) angeordnet ist.

10. Greifzange (10) nach einem der vorhergehenden Ansprüche, insbesondere nach einem der Ansprüche 7 bis 9,
**dadurch gekennzeichnet, dass**
das Gehäuse (11) einen Boden (29) mit wenigstens einer Durchgangsöffnung (31) aufweist, in der ein zweiter, insbesondere von den Greifarmen (13) abgewandter, Kolbenstangenabschnitt (32) verschiebbar geführt ist, und/oder das Gehäuse (11) wenigstens eine Bohrung (33) umfasst, die einen zweiten Arbeitsbereich (34) des Kolbenarbeitsraums (25) mit einer Außenumgebung (AU) verbindet, wobei insbesondere wenigstens ein Filter die Bohrung überdeckt.

11. Greifzange (10) nach einem der vorhergehenden Ansprüche, insbesondere nach einem der Ansprüche 7 bis 10,
**dadurch gekennzeichnet, dass**
wenigstens ein zweites Federelement (35), insbesondere eine zweite Kegeldruckfeder, vorgesehen ist, das/die mit dem Kolben (12) derart zusammenwirkt, dass das Hubelement (14) die Greifarme (13) in einem unbetätigten Zustand des Kolbens in der Offenstellung hält, wobei das zweite Federelement (35) vorzugsweise in dem Kolbenarbeitsraum (25) angeordnet ist und an dem Kolben (12) anliegt, um eine Federkraft in Mittelachsrichtung gegen den Kolben (12) aufzubringen.

12. Greifzange (10) nach einem der vorhergehenden Ansprüche, insbesondere nach Anspruch 10 oder 11,
**dadurch gekennzeichnet, dass**
wenigstens ein Kanal (36) in dem zweiten Kolbenstangenabschnitt (32) und/oder dem Kolben (12) ausgebildet ist, der einen Anschluss (37) zum Zuführen eines Betätigungsfluides, insbesondere von Druckluft, mit einem ersten Arbeitsbereich (38) des Kolbenarbeitsraums (25) fluidverbindet, der zwischen dem Führungs- und Lagerelement (24) und dem Kolben (12) gebildet ist.

13. Greifzange (10) nach einem der vorhergehenden Ansprüche
**dadurch gekennzeichnet, dass**
wenigstens ein Anschluss (37) zum Zuführen eines Betätigungsfluides, insbesondere von Druckluft, mit dem Gehäuse (11) verbunden ist, der wenigstens eine umfänglich ausgebildete Formschlusskontur, insbesondere eine Sechskantkontur (39), aufweist.

14. Greifzange (10) nach einem der vorhergehenden Ansprüche
**dadurch gekennzeichnet, dass**
die Greifarme (13) wenigstens eine Schnellverschlusseinrichtung (41) zum Wechseln eines Greifarmabschnitts (42) aufweisen, die außerhalb des Gehäuses (11) angeordnet ist.

15. Greifsystem (100) mit wenigstens einer Greifzange (10) nach einem der vorhergehenden Ansprüche und mit wenigstens einer Führungs- und Betätigungseinrichtung (101), insbesondere einem Schlauch und/oder einer Luftschiebestange, wobei die Führungs- und Betätigungseinrichtung (101) mit einem Anschluss (37), insbesondere Druckluftanschluss, der Greifzange (10) drehfest verbunden oder verbindbar ist, um ein Drehmoment zu übertragen.

16. Verwendung einer Greifzange (10) nach einem der Ansprüche 1 bis 14 und/oder eines Greifsystems (100) nach Anspruch 15 zur Reinigung von Rohrleitungen, insbesondere eines Abwasser- und/oder Kanalsystems.
